# EUROPÄISCHE PATENTSCHRIFT

(11) **EP 3 289 311 B1**
(45) Veröffentlichungstag und Bekanntmachung des Hinweises auf die Patenterteilung: **19.12.2018**
(21) Anmeldenummer: 16794935.3
(22) Anmeldetag: 14.09.2016
(51) Int. Cl.: G01B 21/14, G01B 21/20, G01B 11/12, G01B 11/24, G01N 21/954

(54) **VORRICHTUNG ZUM VERMESSEN DER GEOMETRIE DER INNENWAND VON BOHRUNGEN UND VERFAHREN**
DEVICE FOR MEASURING THE GEOMETRY OF THE INNER WALL OF BORES AND CORRESPONDING METHOD
DISPOSITIF DE MESURE DE LA GÉOMÉTRIE DE LA PAROI INTÉRIEURE DE TROUS ET PROCÉDÉ

(30) Priorität: 24.05.2016 DE 102016208949
(43) Veröffentlichungstag der Anmeldung: 07.03.2018
(73) Patentinhaber: Micro-Epsilon Messtechnik GmbH & Co. KG, 94496 Ortenburg (DE)
(72) Erfinder: HAAS, Juergen, 94496 Ortenburg (DE); STREICHER, Alexander, 94051 Mauth (DE); JOCHUM, Bernhard, 94542 Haarbach (DE); SCHALLMOSER, Guenter, 94099 Ruhstorf (DE)
(74) Vertreter: Patent- und Rechtsanwälte Ullrich & Naumann
(86) Internationale Anmeldenummer: PCT/DE2016/200430
(87) Internationale Veröffentlichungsnummer: WO 2017/202399

(56) Entgegenhaltungen:
- WO-A1-2005/121700
- WO-A2-2007/139768
- DE-A1- 3 923 401
- JP-A- 2013 195 412

## Beschreibung

Die vorliegende Erfindung betrifft eine Vorrichtung zum Vermessen der Geometrie der Innenwand von Bohrungen, Bohrlöchern oder Durchgängen, ggf. mit Senkung, insbesondere für Schraub-, Stift- oder Nietverbindungen von Werkstücken, umfassend mindestens einen gegen die Innenwand messenden optischen Sensor, der über eine Vorschub-/Dreheinheit in das Bohrloch einführbar und drehbar ist, wobei ein Hilfsobjekt mit einem Durchgang vorgesehen ist, welches auf der Oberfläche des Werkstücks zur Anlage kommt und durch dessen Durchgang der Sensor in die Senkung und/oder Bohrung eintaucht.

Des Weiteren betrifft die Erfindung ein Verfahren zum Vermessen der Geometrie der Innenwand von Bohrungen, Bohrlöchern oder Durchgängen, ggf. mit Senkung, insbesondere für Schraub-, Stift- oder Nietverbindungen von Werkstücken, wobei ein gegen die Innenwand messender optischer Sensor über eine Vorschub-/Dreheinheit in das Bohrloch einführbar und drehbar ist, wobei ein Hilfsobjekt mit einem Durchgang auf der Oberfläche des Werkstücks zur Anlage kommt, durch dessen Durchgang der Sensor in die Senkung und/oder Bohrung eingetaucht wird.

Zu den gattungsbildenden Merkmalen sei angemerkt, dass es hier um die Vermessung der Innenwand von Bohrungen, Bohrlöchern oder Durchgängen geht, wobei diese mit oder ohne Senkung ausgeführt sein können. Sofern fortlaufend von Bohrungen die Rede ist, soll dies als Synonym für jedwede Materialausnehmungen verstanden werden. Bei der Vermessung geht es letztendlich um ein optisches Abtasten der diesbezüglichen Innenwand.

In vielen Bereichen der Fertigung gewinnt die Vermessung von Bohrungen oder Bohrlöchern immer mehr an Bedeutung. Der Innendurchmesser von Bohrungen für Schraub-, Stift oder Nietverbindungen hat einen entscheidenden Einfluss auf die spätere Festigkeit der Verbindung, da bei nicht angepasstem Durchmesser oder bei nicht exakt gemessener Tiefe der Bohrung die später eingesetzte Schraube, Passstift oder Niete entweder nicht eingeführt werden kann (die Bohrung ist zu klein), oder die Schraube, Passstift oder Niete keinen hinreichenden Halt besitzt (die Bohrung ist zu groß). Bei versenkten Schrauben oder Nieten kommt noch hinzu, dass der Schrauben- bzw. Nietenkopf bündig abschließen und nicht überstehen soll. Gerade bei sicherheitsrelevanten Schraub- oder Nietverbindungen, z.B. in der Automobil- oder Flugzeugindustrie, ist es deshalb erforderlich, die Geometrie der Bohrung vor dem Schraub- oder Nietvorgang präzise zu vermessen.

Beim Flugzeugbau kommt eine weitere Anforderung hinzu, nämlich dahingehend, dass ein bündiger Abschluss der Niete mit der Flugzeug-Außenhaut gewährleistet sein muss, um nämlich Luftverwirbelungen zu vermeiden, die einen erhöhten Treibstoffverbrauch bedingen.

Für die Messung der Geometrie von Bohrungen sind aus der Praxis verschiedene Methoden bekannt. Beispielsweise wird mit einem oder mehreren Abstandssensoren der Durchmesser bestimmt, indem der Abstandssensor mittels einer geeigneten Halterung in das Bohrloch eingeführt wird. Der Sensor misst seitlich den Abstand zur Innenwand der Bohrung. Durch Drehen des Sensors mit dessen Halterung kann der Innendurchmesser über den gesamten Umfang bestimmt werden. Häufig werden auch zwei oder mehrere Sensoren verwendet. Damit kann entweder nur der Durchmesser an wenigen Stellen bestimmt werden (ohne Drehung), oder die Messung erfolgt schneller, weil keine volle Umdrehung benötigt wird. Wird die Halterung des Sensors während der Messung in axialer Richtung der Bohrung bewegt, kann so die Innenfläche der Bohrung abgetastet und deren Geometrie vermessen werden.

Aus der Praxis sind verschiedene Methoden bekannt, die Abstandsmessung durchzuführen. Einfache tastende Abstandssensoren (Messtaster) benötigen einen großen Bauraum und sind daher nur für große Bohrungen geeignet. Außerdem berühren sie die Oberfläche, was zu einer Beschädigung des Werkstücks führen kann. Daher kommen berührungslose Messmethoden zum Einsatz, beispielsweise kapazitive oder optische Methoden.

Der Nachteil der kapazitiven Messung ist darin zu sehen, dass der Messfleck relativ groß ist und damit nur ein grob gemittelter Messwert erzielt werden kann. Bevorzugt werden daher optische Messmethoden eingesetzt. Besonders gut geeignet sind Laser-Abstandssensoren oder konfokal chromatische Sensoren, die eine nahezu punktförmige Messung erlauben. Dadurch kann die Geometrie der Bohrung mit hoher Ortsauflösung bestimmt werden.
Aus EP 1 754 018 A1 ist beispielhaft die Vermessung von Bohrungen mit konfokal chromatischen Sensoren bekannt. Mittels einer geeigneten Strahlumlenkung (Spiegel oder Prisma) wird der Messstrahl des Sensors seitlich auf die Innenwand der Bohrung projiziert. Durch Drehen des Sensors erfolgt eine Abtastung der Innenwand der Bohrung. Vorteil optischer Verfahren ist, dass der Messkopf sehr klein und kompakt ausgeführt sein kann, wobei das Licht über einen Lichtleiter in den Messkopf geführt und dort umgelenkt wird. Die restlichen Komponenten des Sensors (Lichtquelle, Spektrometer, Auswerteeinheit etc.) können außerhalb der Bohrung angeordnet sein. Mit dieser Anordnung können Bohrungen bis in den Sub-Millimeter-Bereich vermessen werden.

Aus DE 3923401 A1 ist eine Vermessung der Innenwand einer Bohrung bekannt, wobei während einer Vorschubbewegung durch einen Kalibrierring die Innenwand des Kalibrierrings abgetastet wird.

Gemäß Stand der Technik lassen sich einfache zylindrische Bohrungen problemlos vermessen. Sind die Bohrungen jedoch mit einer Senkung ausgestattet, wie dies bei Schraubverbindungen oder Nietverbindungen der Fall sein kann, um nämlich ein Vorstehen des Schrauben- oder Nietenkopfes zu vermeiden, versagt der Stand der Technik. Schraub- oder Nietverbindungen werden häufig verwendet, um zwei oder mehrere Werkstücke miteinander zu verbinden, und zwar mit Senkung im Falle eines zu versenkenden Schrauben-/Nietenkopfes.
Optische Abstandssensoren sind üblicherweise spezifiziert bei im Wesentlichen rechtwinkliger oder senkrechter Anordnung der Oberfläche zum Messstrahl. Je stärker die Oberfläche zur Messrichtung geneigt ist, umso größere Messfehler können auftreten. Damit ist auch die Bestimmung der Geometrie der Senkung erschwert. Ein weiteres Problem sind Kanten. Da der Messfleck eine gewisse Größe aufweist, befindet sich bei einem Übergang über eine Kante der Messfleck teilweise auf der einen und teilweise auf der anderen Seite der Kante, was zu undefinierten Messergebnissen führen kann. Dies trifft bei Senkungen sowohl an der Oberkante (hin zur Oberfläche des Werkstückes) auf als auch beim Übergang von der Senkung in die Bohrung zu. Damit ist es oft nicht möglich, den exakten Wert der Tiefe der Senkung zu ermitteln, weil deren Beginn und deren Übergang zur Bohrung nicht präzise genug vermessen werden kann. Damit kann auch die Tiefe der Bohrung nicht präzise bestimmt werden, da auch diese Messung von einer exakten Bestimmung der Oberkante der Senkung abhängt.

Ein weiterer Nachteil für die Messung von Senkungen mit optischen Sensoren mit hoher Präzision, insbesondere konfokal chromatische Sensoren, ist deren geringer Messbereich. Der Beginn der Senkung kann außerhalb des Messbereiches liegen, wodurch eine Bestimmung des Startpunktes (Übergang Senkung - Oberfläche Werkstück) nicht bestimmbar ist. Damit ist auch eine Tiefenmessung oder Bestimmung der Länge der Senkung nicht möglich.

Voranstehende Problematik hat man in der Praxis durch den Einsatz eines Hilfsobjekts zu lösen versucht, wobei das Hilfsobjekt mechanisch mit dem Sensor verbunden wird. Das bekannte Hilfsobjekt ist in Form einer Hülse oder eines Rings ausgeführt und wird mittels einer Feder auf das Werkstück aufgesetzt. Durch Aufsetzen des Hilfsobjekts auf das Werkstück wird eine eindeutige Position definiert, die zur Vermessung der Senkung/Bohrung herangezogen werden kann. Der Innendurchmesser des Hilfsobjektes ist so gewählt, dass dieser innerhalb des Messbereichs des Sensors liegt. Beim Aufsetzen der Messanordnung auf das Werkstück wird zunächst das Hilfsobjekt auf das Werkstück aufgesetzt. Der Sensor erfasst den inneren Durchmesser des Hilfsobjektes. Beim Vorschub des Sensors in Richtung Bohrung wird die Kante des Hilfsobjektes erreicht und vom Sensor erkannt. Sofern das Hilfsobjekt vollflächig auf dem Werkstück aufliegt, korreliert also die Kante des Hilfsobjektes mit der Oberkante der Senkung. Ausgehend von diesem Nullpunkt kann die Länge der Senkung, die Kante des Überganges zur Bohrung und ggf. die Tiefe der Bohrung bestimmt werden.

Doch selbst bei Verwendung eines Hilfsobjekts treten weitere Probleme auf:
Die Kante des Hilfsobjekts ist nicht exakt feststellbar, da Kanten mit optischen Sensoren häufig nicht mit ausreichender Genauigkeit zu detektieren sind. Besonders nachteilig wirkt sich aus, wenn der Durchmesser der Senkung an der Oberfläche des Werkstückes außerhalb des Messbereiches des Sensors liegt, da dann der Sensor sozusagen an der Kante "ins Unendliche sieht". Häufig treten an dieser Stelle Ausreißer oder starkes Rauschen auf, so dass kein eindeutiger, gültiger Messwert für die Kante erhalten wird. Auch kann oftmals eine hinreichend gut ausgeprägte Kante durch mechanische Bearbeitung nicht hergestellt werden.

Durch Zentrierung der Messvorrichtung oder wenn der Durchmesser der Senkung annähernd dem Durchmesser des Hilfsobjektes entspricht, ist der gemessene Abstand zum Hilfsobjekt und zum Werkstück annähernd gleich, was eine Unterscheidung und genaue Bestimmung der Kante erschwert.

Im Lichte der voranstehenden Ausführungen liegt der Erfindung die Aufgabe zugrunde, eine Vorrichtung zum Vermessen der Geometrie der Innenwand von Bohrung, Bohrlöchern oder Durchgängen, ggf. mit Senkung, derart auszugestalten und weiterzubilden, dass die Messergebnisse hochgenau und präzise sind. Die Vorrichtung soll darüber hinaus einfach im Aufbau sein. Des Weiteren soll ein entsprechendes Verfahren zur Anwendung bei der erfindungsgemäßen Vorrichtung angegeben werden.

Voranstehende Aufgabe ist in Bezug auf die erfindungsgemäße Vorrichtung durch die Merkmale des Anspruchs 1 gelöst, wonach die Vorrichtung dadurch gekennzeichnet ist, dass die Innenwand des Hilfsobjekts strukturbehaftet ist und dass der Sensor während seiner Vorschubbewegung durch das Hilfsobjekt hindurch diese Struktur(en) abtastet.

In Bezug auf das erfindungsgemäße Verfahren ist die voranstehende Aufgabe durch die Merkmale des nebengeordneten Anspruchs 9 gelöst, wobei das gattungsbildende Verfahren dadurch gekennzeichnet ist, dass die Innenwand des Hilfsobjekts strukturbehaftet ist und der Sensor während seiner Vorschubbewegung durch das Hilfsobjekt hindurch diese Struktur(en) abtastet und Übergangsstellen, insbesondere Unterschiede in Helligkeit, Material und/oder Oberflächenbeschaffenheit, aber auch Ecken, Kanten, etc., durch Anfitten von Kurven, beispielsweise Geraden, Kreisbögen oder sonstigen geometrisch einfach zu beschreibenden Figuren an die Messwerte und anschließendes Berechnen deren Schnittpunkte bestimmt werden, wobei die Schnittpunkte die Übergangsstellen definieren.

Für einen zweckmäßigen Einsatz der Erfindung ist es nicht zwingend erforderlich, ausschließlich distanzbasierte Verfahren einzusetzen. Alternativ oder ggf. ergänzend lassen sich andere Merkmale, wie beispielsweise Helligkeit, Glanzgrad, Farbe, Material und/oder Oberflächenbeschaffenheit in analoger Weise nutzen. Zustandsübergänge können vom Sensor erfasst und deren Position anschließend ausgewertet werden. Ein unterschiedliches Intensitätssignal von der Oberfläche kann z.B. durch Verwendung verschiedener Materialien mit unterscheidbaren Helligkeiten oder unterschiedlicher Lichtstreuung erreicht werden, aber auch durch Aufbringen von Markierungen wie Linien, Kreisen, Schachbrettmustern oder sonstigen Markierungen auf der Oberfläche, beispielsweise mit einem Laser, durch Beschichtung oder Nachbearbeitung. Wie bereits bei geometrischen Merkmalen lässt sich auch mit Hilfe des erfassten Intensitätssignals aus den detektierten Übergängen auf das Ende des Hilfsobjekts rückschließen. Die Stabilisierung erfolgt dann typischerweise durch Mittelung über mehrere solche Übergänge statt mit einer geometrischen Passung. Bei einer hinreichend großen Anzahl von Übergängen lassen sich außerdem Plausibilitätsannahmen einsetzen, um eventuelle falsch erkannte Übergänge vorzeitig zu verwerfen. Es ist nicht erforderlich, die eingesetzten Merkmale absolut präzise zu fertigen. Es reicht aus, wenn in einem Kalibrierschritt eine Vermessung des Hilfsobjekts durch den Sensor erfolgt. Abstandsbasierte und helligkeitsbasierte Verfahren können kombiniert werden, um die Genauigkeit der Ergebnisse weiter zu verbessern.

Die erfindungsgemäße Vorrichtung funktioniert wie folgt:
Die Messvorrichtung wird in axialer Richtung auf die Senkung/Bohrung aufgesetzt. Der Sensor innerhalb der Messvorrichtung bewegt sich in Richtung Senkung/ Bohrung und misst den Abstand zur Innenseite des Hilfsobjektes.

Die Form des Hilfsobjektes kann geeignet gewählt werden. Günstig sind dabei rotationssymmetrische Formen, weil diese einfach durch Drehen hergestellt werden können. Das Hilfsobjekt besitzt an seiner Innenseite eine oder mehrere definierte Strukturen, die mit dem Abstandssensor während der Vorschubbewegung abgetastet werden. Der Abstand der Struktur in axialer Richtung bis zur Kante des Hilfsobjektes ist dabei bekannt oder wird durch Messung bestimmt. Der Abstand kann beispielsweise durch eine präzise Fertigung der Struktur mittels CNC-Daten bekannt sein.

Anstelle einer präzisen Fertigung des Hilfsobjektes können nach dessen Fertigung die Struktur und die exakte Lage der Kante durch Messung und Kalibrierung bestimmt werden.

Es wird der Abstandssensor verwendet, um die Struktur in Abhängigkeit vom Vorschub, z.B. in z-Richtung, zu erfassen. Es könnten beispielsweise bei der Vorschubbewegung die vom Abstandssensor gelieferten Messwerte aufgenommen werden und in Abhängigkeit von Messwerten eines Referenzsensors gespeichert werden. Man erhält Wertepaare des Abstandssensors in Abhängigkeit von der z-Richtung. Dies gilt analog für die weiter erfassten Merkmale wie beispielsweise für die Helligkeit. Durch Vergleich mit einem Normal kann aus den Messwerten des Abstandssensors die absolute Position und Lage der Struktur und der Kante des Hilfsobjektes bestimmt werden. Nach der nachfolgend beschriebenen Bestimmung der Struktur ist dann auch die genaue Position der Kante bekannt. Die Kenntnis des Abstandes von der Struktur bis zur Kante erlaubt es, die Position der Kante in axialer Richtung genau zu definieren. Beim Aufsetzen des Hilfsobjektes sind somit die Position der Kante des Hilfsobjektes und damit auch die Oberkante der Senkung bekannt.

Für die Ausgestaltung der Struktur gibt es nun verschiedene Möglichkeiten:
Die Struktur kann eine Stufe in der inneren Bohrung des Hilfsobjekts sein. Dabei ist es von Vorteil, wenn der Innendurchmesser des Hilfsobjektes auf jeder Seite der Stufe so gewählt wird, dass der Messbereich des Abstandssensors nicht überschritten wird. Damit wird vermieden, dass der Abstandssensor "ins Unendliche sieht". Somit werden auf jeder Seite der Stufe gültige Messwerte erzeugt, wodurch die axiale Position der Stufe sehr genau bestimmt werden kann. Fügt man weitere Stufen mit jeweils abweichendem Innendurchmesser oder auch Übergänge in der Oberflächenbeschaffenheit hinzu, kann die Messgenauigkeit erhöht werden, da dann eine gewisse Statistik (Mittelwertbildung, Plausibilitätsprüfung) durchführbar ist.

Besonders vorteilhaft ist es, wenn die Struktur eine Rampe oder Schräge umfasst. Bei rotationssymmetrischer Anordnung entspricht die Struktur dann einem Konus. Zwar ist hier die Bestimmung der Kante schwieriger, da der Übergang keine scharfe Stufe bildet, und die Messung gegen geneigte Flächen tendenziell ungünstig ist. Dieser Nachteil kann jedoch ausgeglichen werden, indem durch mehrere Messpunkte eine Gerade gefittet wird. Zunächst werden bei der Vorschubbewegung entlang des konstanten Innendurchmessers Messwerte aufgenommen. Aufgrund von Rauschen oder anderen Messfehlern ist die Messung des Innendurchmessers mit Ungenauigkeit behaftet. Durch die Messwerte kann in bekannter Weise eine Gerade gefittet werden, wodurch ein exakter Wert für den Innendurchmesser ermittelbar ist. Bei Fortsetzung der Vorschubbewegung werden entlang der geneigten Fläche weitere Messwerte aufgenommen. Auch hier wird in analoger Weise eine Gerade gefittet. Der Übergang wird durch den Schnittpunkt der beiden Geraden bestimmt. Der Schnittpunkt kann mit hoher Genauigkeit festgestellt werden, da die Geraden bereits gemittelte Messwerte enthalten. Damit können Signalaussetzer oder -ausreißer, wie sie an den Übergangsstellen zwischen geraden Stücken und schrägen Stücken oder auch an den Kanten von Hilfsobjekt oder Bohrung auftreten, einfach und wirkungsvoll kompensiert werden. Die Schräge soll derart definiert sein, dass einerseits vom Sensor noch genügend gültige Messwerte erzeugt werden, andererseits aber mathematisch der Schnittpunkt genügend genau bestimmbar ist.

Diese Möglichkeit kann noch weiter ausgebaut werden, indem z.B. nach der ersten Schräge ein erneutes gerades Stück mit konstantem Innendurchmesser in dem Hilfsobjekt eingearbeitet ist. Es kann auch eine Kombination von mehreren Schrägen und geraden Stücken verwendet werden. Dadurch können mehrere Geraden gefittet werden, deren Schnittpunkte mit hoher Genauigkeit bestimmt werden können, wodurch die Gesamtgenauigkeit der Kantenbestimmung erhöht wird.

Durch das Fitten von Geraden in die stückweise geraden Abschnitte (Schräge, Innendurchmesser, Senkung) kann der (oder die) Schnittpunkt(e) exakt bestimmt werden, beispielsweise durch mathematische Verfahren, oder durch Auswertung mittels eines Computers. In einer ganz allgemeinen Form kann die Struktur beliebige geometrische Figuren umfassen, wie z.B. Kreisbögen. Die Messwerte müssten dann in einer geeigneten Weise gefittet werden, beispielsweise durch Polynominterpolation oder durch Spline-Interpolation.

In gleicher Weise wie beim Hilfsobjekt wird auch die Kontur der Bohrung, der Senkung oder des Absatzes bestimmt, indem an die Messwerte Kurven angefittet werden. Damit können die geometrischen Merkmale der Bohrung/Senkung bestimmt werden. Besonders an den Übergangsstellen ist die Bestimmung der genauen Lage möglich, weil nicht mit Rauschen oder Aussetzern behaftete Sensorsignale herangezogen werden, sondern die charakteristischen Merkmale durch mathematische Verfahren (Fitten, Berechnung von Schnittpunkten etc.) genau bestimmt werden.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Ansicht die geometrischen Verhältnisse bei der Verbindung zweier Werkstücke,
- Fig. 2: in einer schematischen Ansicht eine Vermessung mittels optischem Sensor gemäß Stand der Technik,
- Fig. 3: in einer schematischen Ansicht eine konkrete Ausgestaltung/Anordnung einer Messvorrichtung mit Hilfsobjekt,
- Fig. 4: in einem Diagramm das Profil der Messung gemäß Messvorrichtung nach Fig. 3
- Fig. 5a: in einer schematischen Ansicht ein Ausführungsbeispiel eines Hilfsobjekts einer erfindungsgemäßen Vorrichtung,
- Fig. 5b: in einer schematischen Ansicht ein weiteres Ausführungsbeispiel eines Hilfsobjekts einer erfindungsgemäßen Vorrichtung,
- Fig. 5c: in einer schematischen Ansicht ein weiteres Ausführungsbeispiel eines Hilfsobjekts einer erfindungsgemäßen Vorrichtung,
- Fig. 6: in einer schematischen Ansicht ein weiteres Ausführungsbeispiel eines Hilfsobjekts einer erfindungsgemäßen Vorrichtung,
- Fig. 7: in einer schematischen Ansicht ein weiteres Ausführungsbeispiel eines Hilfsobjekts einer erfindungsgemäßen Vorrichtung,
- Fig. 8: in einer schematischen Ansicht ein weiteres Ausführungsbeispiel eines Hilfsobjekts einer erfindungsgemäßen Vorrichtung,
- Fig. 9: in einer schematischen Ansicht die Messvorrichtung im Verlaufe des Vorschubs des Sensors, der sich über die Kante des Konus vor dem Einführen in die Bohrung bewegt und
- Fig. 10: in einem Diagramm das Profil der Messung gemäß Messvorrichtung nach Fig. 9.

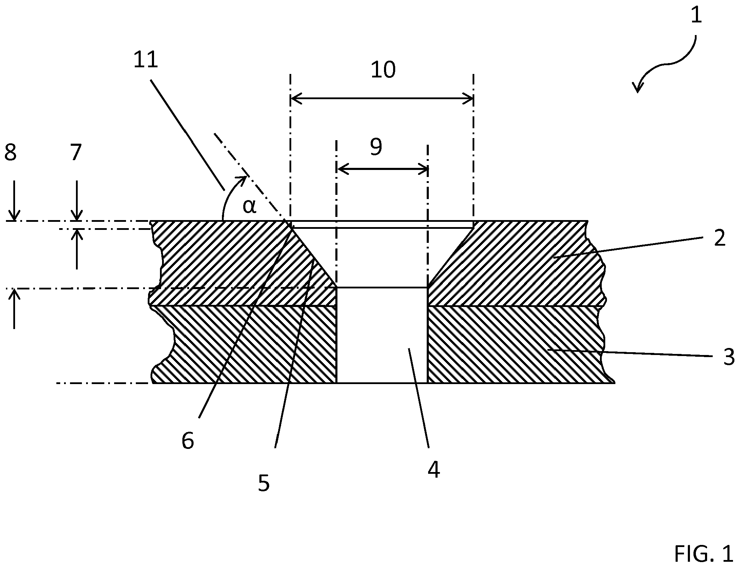

Fig. 1 zeigt die geometrischen Verhältnisse 1 bei der Verbindung zweier Werkstücke 2, 3. Die Bohrung 4 besitzt eine Senkung 5, die dazu dient, dass der Schrauben- oder Nietkopf nicht über die Werkstückoberfläche hinausragt. An der Oberkante der Senkung 5 kann noch ein kleiner Absatz 6 angeordnet sein. Zahlreiche geometrische Merkmale können vermessen werden: Die Tiefe des Absatzes 7 oder der Senkung 8, der Durchmesser des Absatzes 10 oder der Bohrung 9, der Winkel α 11 der Senkung, oder die Gesamtdicke der beiden verbundenen Werkstücke. Die Überprüfung der Messwerte ist erforderlich, damit die im anschließenden Schraub- oder Nietprozess eingebrachten Schrauben oder Nieten weder über die Oberfläche herausstehen noch zu tief im Bohrloch sitzen. Diese Kriterien sind für die Stabilität und Haltbarkeit der Schraub- bzw. Nietverbindung essentiell.

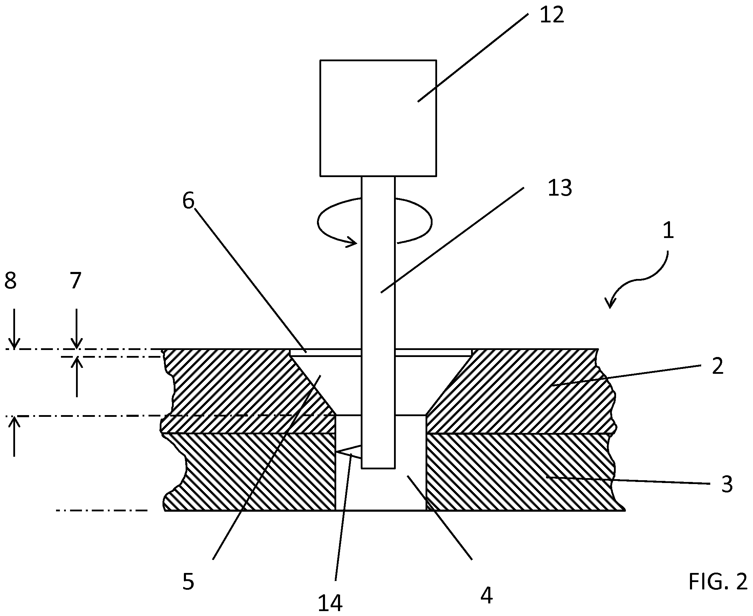

Fig. 2 zeigt den Messvorgang für den Innendurchmesser 9 der Bohrung 4. Eine Messvorrichtung 12 enthält einen Sensor 13, der mittels einer der Einfachheit halber nicht gezeigten Vorschub- und Dreheinheit in das Bohrloch eingeführt und dort gedreht wird. Durch eine oder mehrere Umdrehungen des Sensors 13 kann der Innendurchmesser 9 der Bohrung 4 durch Abtastung mit dem Messstrahl 14 vermessen werden. Durch die Vorschubeinheit kann dies an mehreren Tiefenpositionen der Bohrung 4 erfolgen.

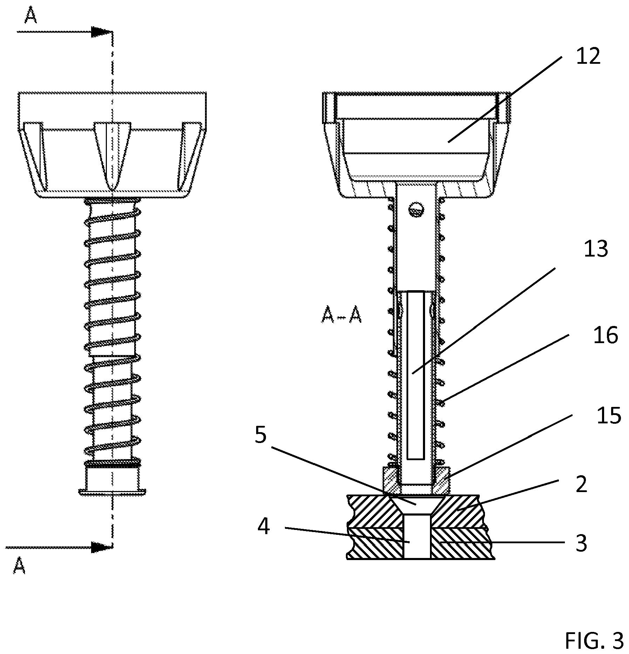

Fig. 3 zeigt die Messvorrichtung 12 mit dem Sensor 13 und einem Hilfsobjekt 15, das beim Vorschub der Messvorrichtung 12 mittels einer Feder 16 an die Oberfläche des Werkstückes 2 gedrückt wird. Der Sensor 13 taucht dann durch das Hilfsobjekt 15 hindurch in die Senkung 5 oder Bohrung 4 ein. Bei der Vorschubbewegung werden das Profil des Hilfsobjektes 15 sowie die Profile des Absatzes 6 und der Senkung 5 aufgenommen.

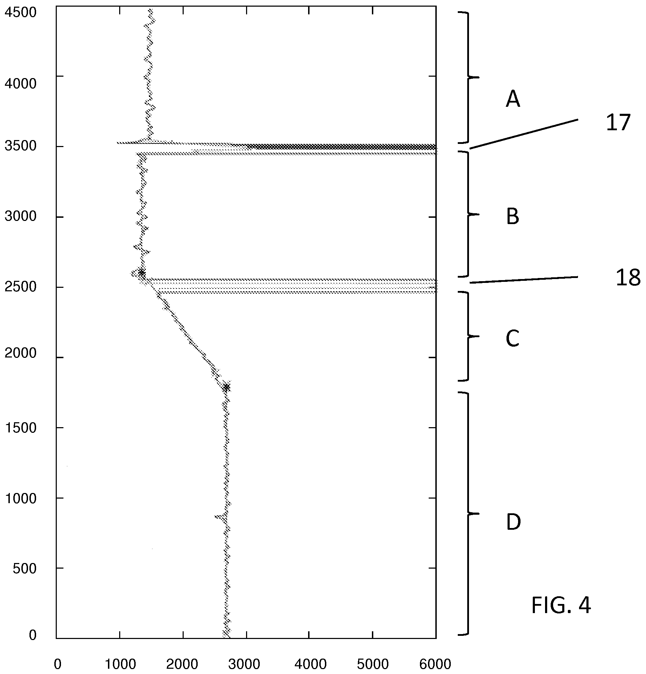

Fig. 4 zeigt das Profil der Messung aus Fig. 3. Der Bereich A bildet die Innenkontur des Hilfsobjektes 15 ab. Der Bereich B entspricht dem Absatz 6, der Bereich C der Senkung 5 und der Bereich D der Bohrung 4. Deutlich zu erkennen sind die Ausreißer der Messwerte am Übergang zwischen A und B (Übergang 17 Kante des Hilfsobjektes zur Oberkante des Werkstückes) sowie B und C (Übergang 18 vom Absatz 6 auf die Senkung 5). Diese Messwerte können für eine exakte Positionsbestimmung der Kante oder des Überganges nicht herangezogen werden.

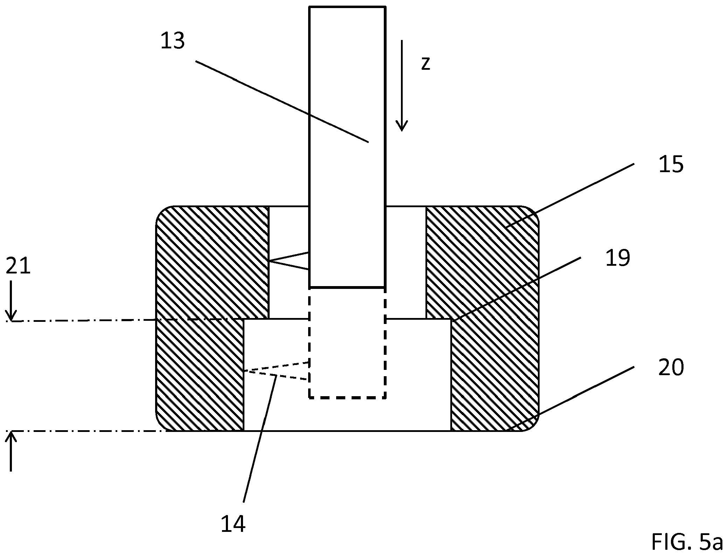

Fig. 5a zeigt eine beispielhafte Ausgestaltung des Hilfsobjektes 15. Im Inneren des Hilfsobjektes ist eine Stufe 19 herausgearbeitet, beispielsweise durch Drehen. Die Kante der Stufe 19 hat einen bekannten Abstand 21 zu der Kante des Hilfsobjektes 20. Der Innendurchmesser 9 nach der Stufe in Richtung Kante ist so gewählt, dass der Messbereich des Sensors 13 nicht überschritten wird. Der Messstrahl 14 liefert demnach gültige Messwerte.

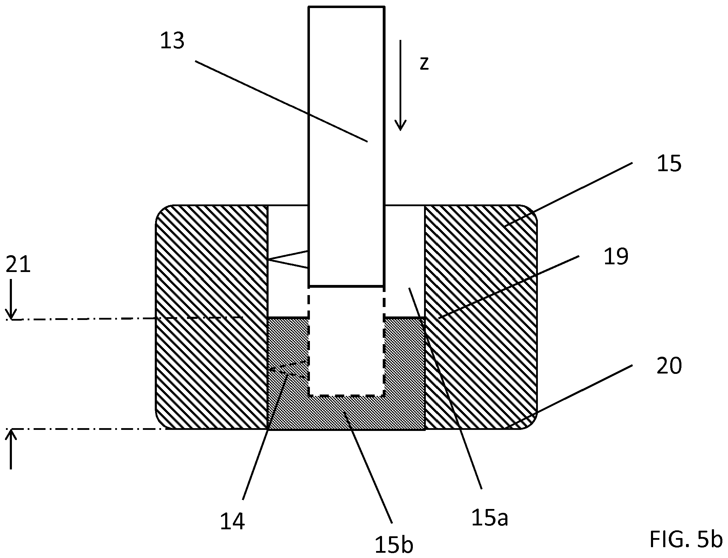

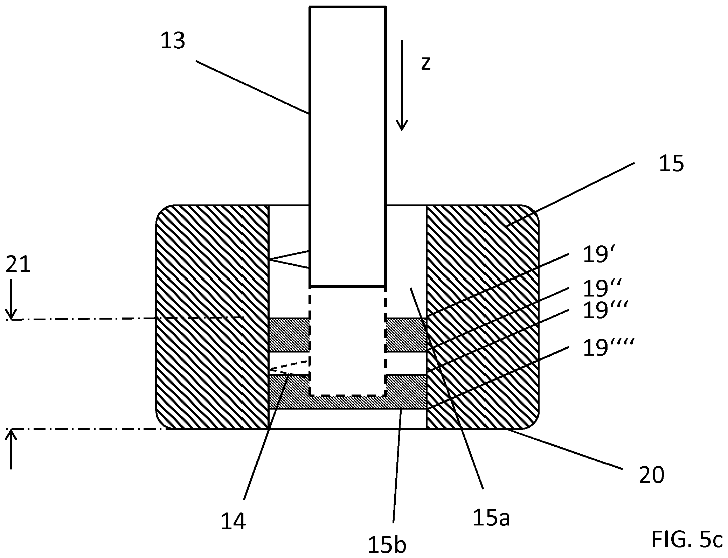

Fig. 5b zeigt eine weiter beispielhafte Ausgestaltung des Hilfsobjektes 15. Im Inneren des Hilfsobjektes 15 weist die Struktur der Oberfläche einen Wechsel in der Beschaffenheit auf. Hier ist ein Wechsel in der Helligkeit dargestellt. Im oberen Teil 15a ist die Innenfläche hell, im unteren Teil 15b dagegen dunkel. Der Wechsel findet an der Stelle 19 statt, so dass diese einen bekannten Abstand 21 zu der Kante des Hilfsobjektes 15 aufweist. Der Sensor 13 erkennt den Wechsel in der Oberflächenbeschaffenheit an der Kante 19, indem beispielsweise das Intensitätssignal ausgewertet wird. In gleicher Weise könnten auch andere Strukturen auf der Innenseite angebracht sein, beispielsweise Farbänderungen oder Änderungen im Glanzgrad. Dies ist beispielhaft in Figur 5c gezeigt.

Gemäß Fig. 5c ist die Innenfläche des Hilfsobjektes 15 farblich strukturiert (oberer Teil 15a, unterer Teil 15b) mit wechselnden Hell-Dunkel-Übergängen zwischen den Teilen. Aus der bekannten Position der Übergänge 19', 19", 19"', 19"" kann der Abstand zur Kante 20 des Hilfsobjektes 15 bestimmt werden.

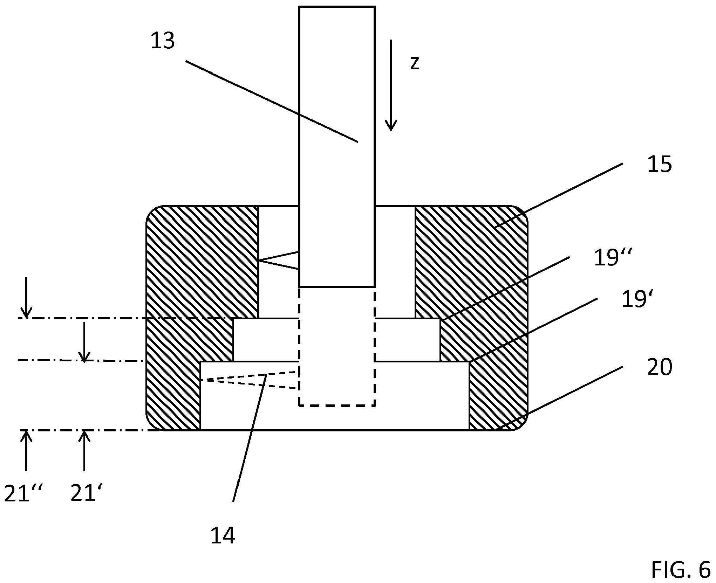

Fig. 6 zeigt eine weitere beispielhafte Ausgestaltung des Hilfsobjektes 15. Im Inneren des Hilfsobjektes sind zwei Stufen 19', 19" herausgearbeitet. Die Kante der ersten Stufe (19') hat einen bekannten Abstand 21' zu der Kante 20 des Hilfsobjektes 15, die Kante der zweiten Stufe 19" hat einen bekannten Abstand 21" zur Kante des Hilfsobjektes.

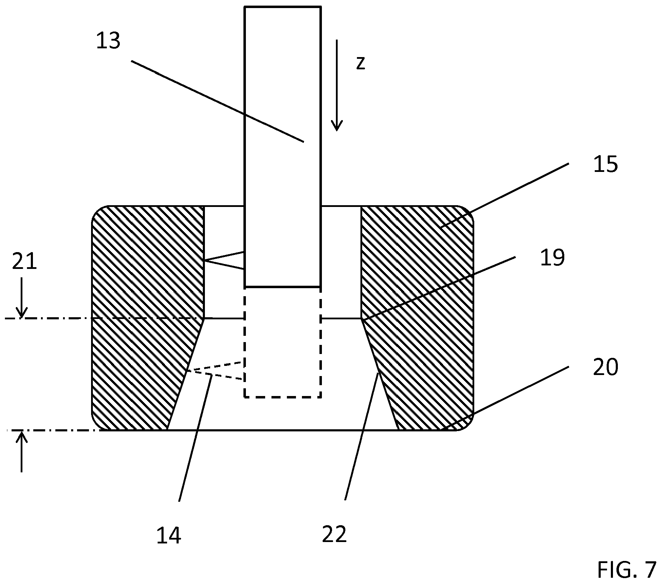

Fig. 7 zeigt eine weitere beispielhafte Ausgestaltung des Hilfsobjektes 15. Im Inneren des Hilfsobjektes ist eine Schräge (Konus) 22 herausgearbeitet, beispielsweise durch Drehen. Die Kante 19 des Überganges auf den Konus 22 hat einen bekannten Abstand 21 zu der Kante des Hilfsobjektes 20.

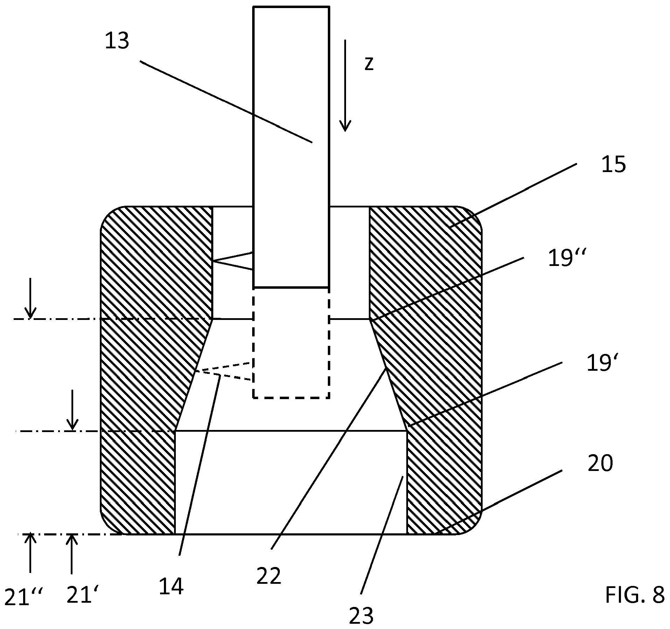

Fig. 8 zeigt eine weitere beispielhafte Ausgestaltung des Hilfsobjektes 15. Im Inneren des Hilfsobjektes ist eine Schräge (Konus) 22 herausgearbeitet, beispielsweise durch Drehen. Daran schließt sich erneut ein Bereich konstanten Durchmessers 23 an. Die erste Kante 19' des Überganges auf den Konus 22 hat einen bekannten Abstand 21' zu der Kante 20 des Hilfsobjektes 15, die zweite Kante 19" des Überganges hat einen zweiten bekannten Abstand 21" zu der Kante des Hilfsobjektes. Durch das stückweise Fitten von Geraden an die Messwerte erhält man somit zwei Schnittpunkte 19', 19", die mit hoher Genauigkeit bestimmbar sind.

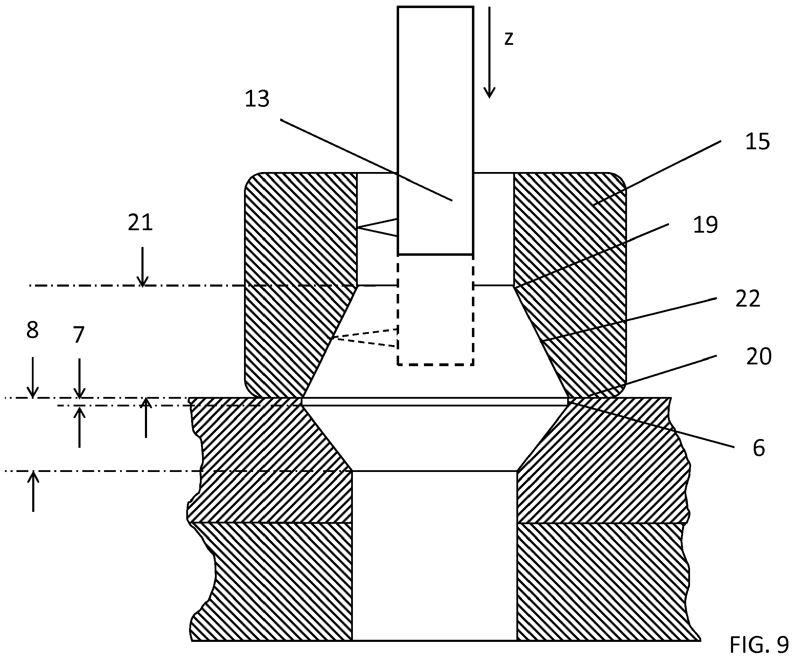

Fig. 9 zeigt die Messanordnung beim Vorschub des Sensors 13 über die Kante des Konus, vor dem Einführen in die Bohrung. In diesem ungünstigen Fall ist der Durchmesser des Absatzes 6 in etwa genau so groß wie der Durchmesser der Schräge 22 an der Kante des Hilfsobjektes. Beim Durchfahren des Sensors 13 würde die Detektion der Kante 20 des Hilfsobjektes erschwert oder sogar unmöglich. Durch das Fitten von Geraden in die stückweise geraden Abschnitte (Schräge, Innendurchmesser, Senkung) kann der Schnittpunkt und damit der Beginn des Messobjektes exakt bestimmt werden.

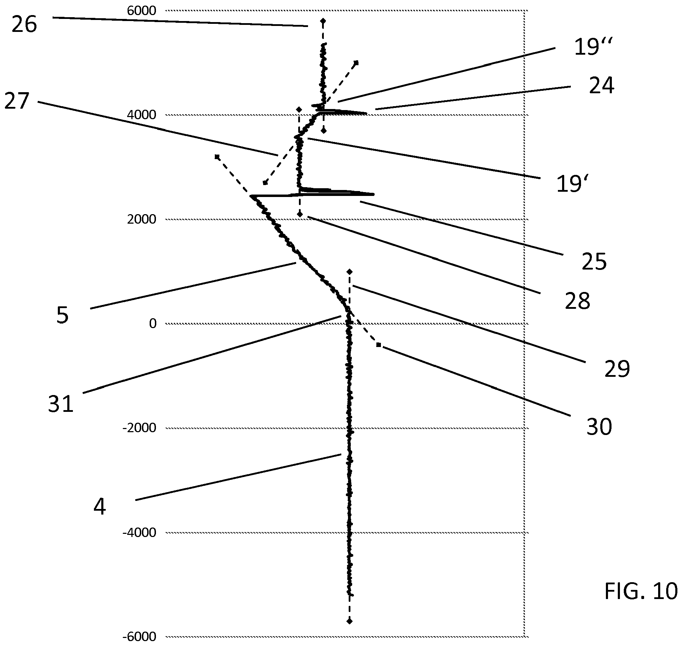

Fig. 10 zeigt beispielhaft das Ergebnis einer Messung während des Vorschubes des Sensors in die Bohrung. Man erkennt das Rauschen auf dem Messsignal, das einerseits durch die Oberflächeneigenschaften des Hilfsobjektes bzw. der Bohrung/Senkung entsteht, andererseits im Sensor selbst. Besonders deutlich erkennt man die Signalaussetzer bzw. -ausreißer an den Übergangsstellen zwischen geraden Stücken und schrägen Stücken, beispielsweise an Stelle 24 beim Hilfsobjekt, oder an der Übergangsstelle zwischen Hilfsobjekt und Senkung 25. Indem man stückweise Geraden an die Messpunkte anfittet, erfolgt eine Mittelung und Glättung. So wird an den Messwerten für das Hilfsobjekt im oberen, geraden Teil eine Gerade 26 gefittet und im Folgenden schrägen Teil eine zweite Gerade 27. Der Schnittpunkt der Geraden liefert dann die genaue Lage der Übergangsstelle 19". Dadurch können exakte Schnittpunkte bestimmt werden, wodurch die Position der Kante 20 genau bestimmt werden kann. Analog bringt man die Passgerade in dem unteren zylindrischen Teil des Hilfsobjekts 28 mit der Passgerade des konischen Teils zum Schnitt, was die Übergangsstelle 19' definiert.

Aus der Kenntnis der exakten Position der Übergangsstellen 19', 19" aus den CAD-Daten oder durch Kalibrierung ist damit die exakte Position der Kante des Hilfsobjektes bestimmt. Damit ist beim Aufsetzen des Hilfsobjektes auf der Senkung auch die genaue Position der Oberkante der Senkung bestimmt.

Gleiches gilt für die Senkung 5 und die Bohrung 4, wo Geraden 29, 30 gefittet werden, deren Schnittpunkt die Übergangsstelle 31 und damit das Ende der Senkung festlegt.

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Lehre lediglich zur Erörterung der beanspruchten Lehre dienen, diese jedoch nicht auf die Ausführungsbeispiele einschränken.

### Bezugszeichenliste

- 1: geometrische Verhältnisse
- 2: Werkstück
- 3: Werkstück
- 4: Bohrung
- 5: Senkung der Bohrung
- 6: Absatz an der Oberkante der Senkung
- 7: Tiefe des Absatzes
- 8: Tiefe der Senkung
- 9: Durchmesser der Bohrung, Innendurchmesser
- 10: Durchmesser des Absatzes
- 11: Winkel α
- 12: Messvorrichtung
- 13: Sensor
- 14: Messstrahl
- 15a: Hilfsobjekt, oberer Teil
- 15b: Hilfsobjekt, unterer Teil
- 16: Feder
- 17: Übergang zwischen Bereich A und Bereich B
- 18: Übergang zwischen Bereich B und Bereich C
- 19, 19', 19'": Stufe, Kante
- 20: Kante des Hilfsobjekts
- 21, 21', 21": Abstand zu der Kante des Hilfsobjekts
- 22: Schräge, Konus
- 23: Bereich mit konstantem Durchmesser
- 24: Stelle
- 25: Übergangsstelle zwischen Hilfsobjekt und Senkung
- 26: erste Gerade
- 27: zweite Gerade
- 28: Gerade
- 29: Gerade
- 30: Kurve, Gerade
- 31: Übergangsstelle

## Patentansprüche

1. Vorrichtung zum Vermessen der Geometrie der Innenwand von Bohrungen, Bohrlöchern oder Durchgängen, ggf. mit Senkung, insbesondere für Schraub-, Stift- oder Nietverbindungen von Werkstücken, umfassend mindestens einen gegen die Innenwand messenden optischen Sensor, der über eine Vorschub-/Dreheinheit in das Bohrloch einführbar und drehbar ist, wobei ein Hilfsobjekt mit einem Durchgang vorgesehen ist, welches auf der Oberfläche des Werkstücks zur Anlage kommt und durch dessen Durchgang der Sensor in die Senkung und/oder Bohrung eintaucht,
**dadurch gekennzeichnet, dass** die Innenwand des Hilfsobjekts strukturbehaftet ist und dass die Vorrichtung so gestaltet ist, dass der Sensor während seiner Vorschubbewegung durch das Hilfsobjekt hindurch diese Struktur oder Strukturen abtastet.

2. Vorrichtung nach Anspruch 1, **dadurch gekennzeichnet, dass** die Struktur(en) insbesondere aufgrund einer präzisen Fertigung bekannt ist/sind.

3. Vorrichtung nach Anspruch 1, **dadurch gekennzeichnet, dass** die Strukturen durch Messung und Kalibrierung ermittelbar ist/sind.

4. Vorrichtung nach einem der Ansprüche 1 bis 3, **dadurch gekennzeichnet, dass** die Struktur(en) rotationssymmetrisch ist/sind.

5. Vorrichtung nach einem der Ansprüche 1 bis 4, **dadurch gekennzeichnet, dass** der axiale Abstand der Struktur(en) zu den jeweiligen Kanten des Durchgangs des Hilfsobjekts bekannt ist.

6. Vorrichtung nach einem der Ansprüche 1 bis 5, **dadurch gekennzeichnet, dass** die Struktur(en) eindeutige geometrische Merkmale hat/haben.

7. Vorrichtung nach einem der Ansprüche 1 bis 6, **dadurch gekennzeichnet, dass** die Struktur(en) durch Unterschiede in Helligkeit, Material und/oder Oberflächenbeschaffenheit und/oder durch eine oder mehrere Ecken, Kanten, Absätze, etc. gebildet ist/sind.

8. Vorrichtung nach Anspruch 6 oder 7, **dadurch gekennzeichnet, dass** die Struktur(en) durch eine Abfolge gerader und schräger bzw. abgewinkelter Abschnitte gebildet ist.

9. Verfahren zum Vermessen der Geometrie der Innenwand von Bohrungen, Bohrlöchern oder Durchgängen, ggf. mit Senkung, insbesondere für Schraub-, Stift- oder Nietverbindungen von Werkstücken, wobei ein gegen die Innenwand messender optischer Sensor über eine Vorschub-/Dreieinheit in das Bohrloch eingeführt und gedreht wird, wobei ein Hilfsobjekt mit einem Durchgang auf der Oberfläche des Werkstücks zur Anlage kommt, durch dessen Durchgang der Sensor in die Senkung und/oder Bohrung eingetaucht wird,
**dadurch gekennzeichnet, dass** die Innenwand des Hilfsobjekts strukturbehaftet ist und der Sensor während seiner Vorschubbewegung durch das Hilfsobjekt hindurch diese Struktur oder Strukturen abtastet und Übergangsstellen, insbesondere Unterschiede in Helligkeit, Material und/oder Oberflächenbeschaffenheit, aber auch Ecken, Kanten, etc., durch Anfitten von Kurven, beispielsweise Geraden, Kreisbögen oder sonstige geometrisch einfach zu beschreibende Figuren, an die Messwerte und anschließendes Berechnen deren Schnittpunkte bestimmt werden, wobei die Schnittpunkte die Übergangsstellen definieren.

10. Verfahren nach Anspruch 9, **dadurch gekennzeichnet, dass** die Messwerte der Struktur(en) durch mathematische Funktionen bzw. Algorithmen Geraden, Polynomen, etc. angenähert werden.

## Claims

1. Device for measuring the geometry of the internal wall of bores, drill holes or passages, optionally having a countersink, in particular for screw, pin or rivet joints of workpieces, comprising at least one optical sensor that measures the internal wall and can be inserted and rotated into the drill hole by means of a feed/rotary unit, an auxiliary object having a passage being provided which comes into abutment against the surface of the workpiece and through the passage of which the sensor penetrates the countersink and/or bore,
**characterised in that** the internal wall of the auxiliary object has a structure and **in that** the device is designed in such a way that the sensor, during the feed movement thereof through the auxiliary object, scans said structure or structures.

2. Device according to claim 1, **characterised in that** the structure(s) is/are known, in particular due to precise production.

3. Device according to claim 1, **characterised in that** the structures can be ascertained by measurement and calibration.

4. Device according to any one of claims 1 to 3, **characterised in that** the structure(s) is/are rotationally symmetrical.

5. Device according to any one of claims 1 to 4, **characterised in that** the axial spacing of the structure(s) from the respective edges of the passage in the auxiliary object is known.

6. Device according to any one of claims 1 to 5, **characterised in that** the structure(s) has/have distinct geometrical features

7. Device according to any one of claims 1 to 6, **characterised in that** the structure(s) are formed by differences in brightness, material and/or surface finish and/or by a plurality of corners, edges, shoulders, etc.

8. Device according to either claim 6 or claim 7, **characterised in that** the structure(s) is/are formed by a sequence of straight and oblique or angled portions.

9. Method for measuring the geometry of the internal wall of bores, drill holes or passages, optionally having a countersink, in particular for screw, pin or rivet joints of workpieces, an optical sensor that measures the internal wall being inserted and rotated into the drill hole by means of a feed/rotary unit, an auxiliary object having a passage coming into abutment against the surface of the workpiece, through the passage of which object the sensor penetrates the countersink and/or bore,
**characterised in that** the internal wall of the auxiliary object has a structure, and the sensor, during the feed movement thereof through the auxiliary object, scans said structure or structures, and transition points, in particular differences in brightness, material and/or surface finish but also corners, edges, etc., are determined by fitting curves, for example straight lines, circular arcs or other shapes that are geometrically simple to describe, to the measured values and subsequently calculating the points of intersection thereof, the points of intersection defining the transition points.

10. Method according to claim 9, **characterised in that** the measured values of the structure(s) are approximated by mathematical functions or algorithms, straight lines, polynomials, etc.

## Revendications

1. Dispositif de mesure de la géométrie de la paroi intérieure de perçages, de trous de perçage ou de traversées, éventuellement avec un alésage, en particulier pour des raccordements de pièces par vis, par broche ou par rivet, comprenant au moins un capteur optique, mesurant en direction de la paroi intérieure, qui peut être introduit dans le trou de perçage par le biais d'une unité d'avance/de rotation, un objet auxiliaire avec un passage étant prévu, qui vient en appui sur la surface de la pièce et à travers le passage duquel le capteur plonge dans l'alésage et/ou le perçage,
**caractérisé en ce que** la paroi intérieure de l'objet auxiliaire est structurée et **en ce que** le dispositif est constitué de telle sorte que, pendant son mouvement d'avance à travers l'objet auxiliaire, le capteur explore cette structure ou ces structures.

2. Dispositif selon la revendication 1, **caractérisé en ce que** la/les structure(s) est/sont connue(s) en particulier en raison d'une fabrication précise.

3. Dispositif selon la revendication 1, **caractérisé en ce que** les structures peut/peuvent être déterminées par mesure et étalonnage.

4. Dispositif selon l'une des revendications 1 à 3, **caractérisé en ce que** la/les structure(s) présente(nt) une symétrie de rotation.

5. Dispositif selon l'une des revendications 1 à 4, **caractérisé en ce que** la distance axiale de la/des structure(s) aux arêtes respectives du passage de l'objet auxiliaire est connue.

6. Dispositif selon l'une des revendications 1 à 5, **caractérisé en ce que** la/les structure(s) a/ont des caractéristiques géométriques évidentes.

7. Dispositif selon l'une des revendications 1 à 6, **caractérisé en ce que** la/les structure(s) est/sont formée(s) par des différences de luminosité, de matériau et/ou d'état de surface et/ou par un ou plusieurs coins, arêtes, gradins, etc.

8. Dispositif selon la revendication 6 ou 7, **caractérisé en ce que** la/les structure(s) est formée par une succession de tronçons rectilignes et obliques ou respectivement coudés.

9. Procédé de mesure de la géométrie de la paroi intérieure de perçages, de trous de perçage ou de traversées, éventuellement avec un alésage, en particulier pour des raccordements de pièces par vis, par broche ou par rivet, un capteur optique, mesurant en direction de la paroi intérieure, étant introduit et tourné dans le trou de perçage par le biais d'une unité d'avance/de rotation, un objet auxiliaire avec un passage venant en appui sur la surface de la pièce, à travers le passage duquel le capteur plonge dans l'alésage et/ou le perçage,
**caractérisé en ce que** la paroi intérieure de l'objet auxiliaire est structurée et **en ce que**, pendant son mouvement d'avance à travers l'objet auxiliaire, le capteur explore cette structure ou ces structures, et des emplacements de transition, en particulier des différences de luminosité, de matériau et/ou d'état de surface, mais également des coins, arêtes, etc., sont déterminés par l'application de courbes, par exemple des lignes droites, des arcs de cercle ou d'autres figures géométriquement faciles à décrire, aux valeurs de mesure et par un calcul consécutif de leurs points d'intersection, les points d'intersection définissant les emplacements de transition.

10. Procédé selon la revendication 9, **caractérisé en ce que** les valeurs de mesure de la/des structure(s) sont approchées par des fonctions mathématiques ou respectivement des algorithmes, des lignes droites, des polynômes, etc.
